# EUROPEAN PATENT SPECIFICATION

(11) **EP 3 705 200 B1**
(45) Date of publication and mention of the grant of the patent: **01.05.2024**
(21) Application number: 20161127.4
(22) Date of filing: 05.03.2020
(51) Int. Cl.: B21F 27/12, B23K 11/00, E04C 5/065

(54) **MACHINE FOR PRODUCING SPACERS FOR CONCRETE REINFORCEMENTS AND/OR CONCRETE STRUCTURES, METHODS OF MANUFACTURING SUCH SPACERS, AND USE THEREOF**
MASCHINE ZUR HERSTELLUNG VON ABSTANDHALTERN FÜR BETONBEWEHRUNGEN UND/ODER BETONKONSTRUKTIONEN, VERFAHREN ZUR HERSTELLUNG SOLCHER ABSTANDHALTER UND DEREN VERWENDUNG
MACHINE DE PRODUCTION D'ESPACEURS POUR ARMATURES DE BÉTON ET/OU STRUCTURES EN BÉTON, PROCÉDÉS DE FABRICATION DE TELS ESPACEURS ET UTILISATION DE CELLE-CI

(30) Priority: 05.03.2019 BE 201905130
(43) Date of publication of application: 09.09.2020
(73) Proprietor: Intersig NV, 9200 Dendermonde (BE)
(72) Inventor: OCKET, Piet, 9200 Dendermonde (BE); ROELANT, Tim, 9200 Dendermonde (BE)
(74) Representative: De Clercq & Partners

(56) References cited:
- WO-A1-2017/060808
- US-A- 4 500 763

## Description

### TECHNICAL FIELD

The present invention relates to a machine for producing spacers for concrete reinforcements and concrete structures, methods of manufacturing such spacers, and use thereof.

### TECHNOLOGICAL BACKGROUND OF THE INVENTION

Reinforcements for flat structures in reinforced concrete usually consist of steel reinforcement mats. Often, one or more reinforcement mats are provided both at the top and bottom in the flat structure, so that both tensile and pressure forces can be absorbed in an optimum manner. During construction, the reinforcement mats are usually kept a desired distance apart by means of spacers or lattice girders. Various kinds of spacers or lattice girders are available.

The spacers or lattice girders are produced with the aid of a machine which is provided with separate wires and/or frame structures and completely automatically transforms these and welds them together to form a spacer or lattice girder.

In recent years, there has been a growing demand for more accurate, but also more flexible ways for producing spacers or lattice girders.

Document US 4 500 763 A discloses the features of the preambles of claims 1 and 5.

On the one hand, it is important to ensure that the produced spacers or lattice girders are produced very accurately and therefore suffer as few manufacturing defects as possible. Manufacturing defects with spacers or lattice girders mainly occur during the welding process, in which a weld point has not been welded or been welded incorrectly, insufficiently well or excessively, or in which the entire spacer or lattice girder was deformed during welding.

In addition, new production systems are also expected to be easily adjustable for producing different types of spacers or lattice girders at different production speeds, and with the same accuracy.

There is therefore a need for new or modified machines and new or modified methods for manufacturing spacers or lattice girders.

### SUMMARY

The present invention relates to a machine for producing spacers for concrete reinforcements and/or concrete structures according to claim 1, a method for producing spacers for concrete reinforcements and/or concrete structures according to claim 5, and the use of such machine according to claim 12.

In a first aspect, the present invention provides a machine for producing spacers for concrete reinforcements and/or concrete structures having the features of claim 1.

In a further embodiment, the machine as described herein is characterized in that the welding installation comprises one or more sets of electrodes, which weld the frame structures to the top longitudinal wire, and comprises one or more electrodes which weld each of the frame structures to a bottom longitudinal wire.

In a further embodiment, the machine as described herein is characterized in that the electrodes are actuated by a pneumatic, hydraulic or electrical actuator, preferably an electrical actuator.

In a further embodiment, the machine as described herein is characterized in that the drive mechanism is positioned downstream of the welding installation and pulls the spacer through the welding installation.

In a further aspect, the present invention provides a method for producing spacers for concrete reinforcements and/or concrete structures having the features of claim 5.

In a further embodiment, the method as described herein is characterized in that, in step (a), one or more drive mechanisms clamp the spacers outside the welding installation, and subsequently transport them mechanically to the position of the next weld point.

In a further embodiment, the method as described herein is characterized in that, in step (a), the transport distance corresponds to the distance between the weld points or a multiple thereof.

In a further embodiment, the method as described herein is characterized in that the repetitive movement of each of the gripping systems comprises at least the following successive steps:
(x1) securely gripping the spacer and immobilizing the spacer during a time interval Δt_{w};
(x2) performing of a translational linear movement of the spacer over a distance Δxₘ during a time interval Δtₘ;
(x3) immobilizing the spacer during a time interval Δt_{w};
(x4) performing a translational linear movement of the spacer over a distance Δxₘ during a time interval Δtₘ;
(x5) immobilizing the spacer during a time interval Δt_{w};
(x6) performing of a translational linear movement of the spacer over a distance Δxₘ during a time interval Δtₘ;
(x7) immobilizing of the spacer during a time interval Δt_{w};
(x8) releasing the spacer and performing a translational linear movement over a distance (-3Δxₘ) during a time interval Δt_{b}; and
repeating steps (x1) to (x8).

In a further embodiment, the method as described herein is characterized in that step (b) is performed during the steps in which the spacer is immobilized.

In a further embodiment, the method as described herein is characterized in that the welding installation comprises one or more sets of electrodes, which weld the frame structures to the top longitudinal wire, and comprises one or more electrodes which weld each of the frame structures to a bottom longitudinal wire.

In a further embodiment, the method as described herein is characterized in that the electrodes are actuated by a pneumatic, hydraulic or electrical actuator, preferably an electrical actuator.

In a further aspect, the present invention provides the use of a machine as described herein for producing spacers according to claim 12.

### DESCRIPTION OF THE FIGURES

**FIG. 1** shows a diagrammatic drawing of a specific embodiment of the machine (100) for producing spacers (400).
**FIG. 2** is a diagrammatic representation of the movements of the drive mechanism and the welding installation.

### DETAILED DESCRIPTION

As used below in this text, the singular forms "a", "an", "the" include both the singular and the plural, unless the context clearly indicates otherwise.

The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The enumeration of numeric values by means of ranges of figures comprises all values and fractions in these ranges, as well as the cited end points.

The term "approximately" as used when referring to a measurable value, such as a parameter, an amount, a time period, and the like, is intended to include variations of+/- 10% or less, preferably +/-5% or less, more preferably +/-1% or less, and still more preferably +/-0.1% or less, of and from the specified value, in so far as the variations apply to the invention disclosed herein. It should be understood that the value to which the term "approximately" refers per se has also been disclosed.

Unless defined otherwise, all terms disclosed in the invention, including technical and scientific terms, have the meaning which a person skilled in the art usually gives them. For further guidance, definitions are included to further explain terms which are used in the description of the invention.

As referred to herein, an object is "elongate" if the length of that object is longer than twice the width of that object; preferably the length is longer than three, four or five times the width of the object.

As used herein, the term "perpendicular" may include a certain degree of deviation from an exactly perpendicular orientation. More particularly, a first wire is deemed to be positioned perpendicularly with respect to a face or second wire if the angle between the longitudinal axis of the first wire and the face, or the angle between the longitudinal axes of the first and second wire, is between 85° and 95°; preferably between 89° and 91°; preferably between 89.5° and 90.5°; and most preferably is 90°.

The present invention relates to a machine for producing spacers or lattice girders for concrete reinforcements and concrete structures, methods for manufacturing such spacers or lattice girders, and use thereof. Producing the spacers or lattice girders is achieved by first providing the present machine with separate wires and/or frame structures which will form the skeleton structure of the spacers or lattice girders. More particularly, the machine is provided with at least two parallel longitudinal wires, including one top longitudinal wire and one bottom longitudinal wire. In addition, at least one further frame structure is provided, either already in a desired pattern or in the form of a straight longitudinal wire which is bent to form a desired pattern. During production, the bottom longitudinal wire is connected to the top longitudinal wire by means of a frame structure. The connection between the longitudinal wires and frame structure is achieved by means of a welding installation which uses electrodes. During welding, the top longitudinal wire and/or spacer may furthermore be supported by means of a support.

In one specific embodiment at least three parallel longitudinal wires are provided and the frame structure consists of different transverse wires which connect the different parallel longitudinal wires to each other.

Preferably, the machine is provided with at least three parallel longitudinal wires, including one top longitudinal wire and two bottom longitudinal wires, which form the sides of a triangular prism. In addition, at least two frame structures are provided, either already in a desired pattern or in the form of straight longitudinal wires which are bent to form a desired pattern. During production, each of the bottom longitudinal wires is connected to the top longitudinal wire by means of a frame structure which is placed on the outside or inside of the formed triangular prism. The connection between the longitudinal wires and frame structures is achieved by means of a welding installation which uses electrodes. During welding, the top longitudinal wire and/or spacer may furthermore be supported by means of a support.

After a connection has been achieved, the machine will transport the longitudinal wire and/or spacer through the welding installation in order to make a subsequent connection possible.

This transport of the spacer through the welding installation takes place by means of a drive mechanism which transports the spacer by means of the mechanical entrainment movement.

With prior-art machines, the drive mechanism usually consists of a system which pushes the components of the spacer (longitudinal wires and frame structures) through the welding installation. Typical known drive mechanisms are based on a driven flywheel with a gripping arm which securely grips the components of the spacer, moves them forwards, releases them and returns to the original position in order there again to grip the components of the spacer and move them forwards. However, such a pushing mechanism means that the components of the spacer are not always fixed at the correct point in time during welding of the components, which may result in defects during welding. Also, the components of the spacer will still move after they have been released by the gripping arm, thus reducing the accuracy of such machines.

The present invention relates to a machine or system for producing spacers for concrete reinforcements and concrete structures, methods for manufacturing such spacers, and the use thereof, which makes use of a drive mechanism which is configured to continuously securely clamp the spacer.

In a first aspect, the present invention provides a machine according to claim 1.

As used herein, the term "machine" comprises all terms in which an apparatus is composed of a frame, a drive mechanism and all parts/systems which are required to produce the spacers described herein. The machine is capable of converting a form of energy into a mechanical form of movement, and comprises all components which are required to supply and convert energy for the use of the present machine.

As used herein, the terms "spacer" and "lattice girder", which are regarded as alternative terms, are in particular intended to mean a structure which serves to keep two or more parallel concrete reinforcements, for example reinforcement mats for a flat structure, a desired distance apart. The flat structure may be a horizontal structure, such as a floor, or a vertical structure, such as a wall. The spacers may, for example, be used for keeping reinforcement mats in prefabricated (prefab) hollow walls at a distance. Such walls typically comprise two prefab concrete shells, with each concrete shell comprising a reinforcement mat. These reinforcement mats are kept a distance apart by one or more spacers or lattice girders. In this case, a hollow wall is produced into which concrete may be poured at the building site.

The spacer or lattice girder according to the present invention comprises at least two longitudinal wires, in particular one bottom longitudinal wire and one top longitudinal wire. The bottom longitudinal wire is connected to the top longitudinal wire by means of a frame structure.

Preferably, the spacer or lattice girder according to the present invention comprises three longitudinal wires, in particular two bottom longitudinal wires and one top longitudinal wire. The three longitudinal wires of the spacer each form a (longitudinal) end of a triangular prism. As used herein, the term "triangular prism" refers to a longitudinal polyhedron, in which the cross section perpendicular to the longitudinal axis forms a triangular geometry. In a particular embodiment, the longitudinal edges of said polyhedron run parallel to each other.

Each of the two bottom longitudinal wires is connected to the top longitudinal wire by means of two or more frame structures.

The frame structures ensure that the relative position of the longitudinal wires is fastened, so that the spacer is able to resist stress from the outside, such as bending. With the spacer according to the present invention, each frame structures comprises a wire which is connected to the bottom longitudinal wire at N locations and to the top longitudinal wire at N-1 and N+1 locations, in which N is an integer greater than 1. In particular, N equals 2, 3, 4, 5, 6, 7, 8 or more. Each frame structure preferably comprises a curved or bent wire; as a result of which the entire frame structure comprises one or more curved sections.

In a particular embodiment, the frame structure has a zigzag shape, such as a sinusoid or sawtooth pattern, in which the frame structure is alternately connected to a top and bottom longitudinal wire at each bending and/or curving action.

In a further embodiment, the frame structure has a U-shaped bend or a V-shaped curve, in which the top longitudinal wire is connected to the bent or curved section of the frame structure, and each of the bottom longitudinal wires is connected to one of the ends of the frame structure.

The longitudinal wires and frame structures are preferably made of steel. In certain embodiments, the wires are not smooth, but are, for example, provided with spiral-shaped ribs. As a result thereof, the surface area of the wires increases, resulting in an improved bond of the steel and the concrete. However, this is not compulsory, so that the wires may be smooth in certain embodiments.

The diameter of the longitudinal wires and frame structures is typically between 2.0 and 20.0 mm, preferably between 2.0 and 10.0 mm. In certain embodiments, the diameter of the longitudinal wires and frame structures is between 2.4 and 5.0 mm. In further embodiments of lighter spacers, the diameter of the longitudinal wires and frame structures is between 2.8 and 4.0 mm.

A reduction in the diameter of the longitudinal wires and frame structures could offer a significant advantage as a result of a limitation in production material, which could possibly reduce the production price of the spacers.

An additional advantage of a reduction of the diameters is that this makes it possible to produce lighter spacers. As a result thereof, the weight per meter of a spacer will be reduced, thus creating the possibility of producing spacers having a greater maximum length. Both a reduction in weight and an increase in total length could lead to a reduction in the transportation and fitting costs of the spacers.

Preferably, the top longitudinal wire has a diameter which is greater than that of the bottom longitudinal wires and the frame structures. This could offer an advantage with regard to the stability of the supporting surface of the spacers.

The bottom longitudinal wires preferably have an identical diameter which may be equal to or may differ from the diameter of the top longitudinal wire. However, it is not ruled out that, in certain embodiments, the bottom longitudinal wires have a different diameter or thickness.

The diameter of the frame structures may be identical to the diameter of the longitudinal wires, or may be different.

Usually, all the frame structures of the spacer have an identical diameter or thickness. However, it is not ruled out that, in certain embodiments, the frame structures have a different diameter or thickness.

As used herein, the system of a "drive mechanism" comprises all systems which effect transportation of the longitudinal wires/frame structures and/or spacer through the machine by means of a mechanical motion. As used herein, the terms drive mechanism and driving mechanism are synonymous.

The drive mechanism transports the spacer further to the next weld point after each welding operation, in which case the transport distance corresponds to the distance between the desired weld points, or a multiple thereof.

The drive mechanism according to the present invention provides for transportation of the spacers through the welding installation, in which the drive mechanism comprises a system which securely clamps the spacer for transportation, preferably by means of a mechanical gripping system such as a clamp; characterized in that the drive mechanism is configured to continuously securely clamp the spacer.

Continuously securely clamping the spacer ensures that the spacer also remains fixed in position during the welding process, as a result of which errors during the welding process are prevented. The position of the spacer is correct and accurate at all times, as a result of which the position where welding is to take place is always correct.

The gripping system as described herein is a mechanical gripping system which preferably uses a clamp, an entrainment finger, a conveyor belt or a set of pressure-exerting wheels. The use of a clamp has the advantage that the risk of losing grip is very small. The use of a strong clamp lowers the risk of a possible slipping on the surface of the spacer and/or longitudinal wire and the possibly incorrect conveying of the transport distance.

By using two gripping systems which perform the same repetitive movement, but in which the two gripping systems do not move in phase with each other (there is a phase shift of the repetitive movement of the first gripping system with respect to the repetitive movement of the second gripping system), the drive mechanism ensures that the spacer is at all times (continuously) securely clamped. When the first gripping system has to release the spacer to return to the original position for securely gripping the spacer (for example when the first gripping system has reached its maximum movement distance), then the second gripping system has already securely gripped the spacer and continues transportation of the spacer without releasing the spacer.

In one embodiment, the drive mechanism securely clamps the spacer for transportation by securely clamping at least one longitudinal wire and/or securely clamping the frame structure after the frame has been attached to the longitudinal wires, preferably by means of a mechanical gripping system such as a clamp.

In one embodiment, the drive mechanism securely clamps the spacer by means of the longitudinal wires for transportation and/or by means of the frame structure after the frame has been attached to the longitudinal wires, preferably by means of a mechanical gripping system such as a clamp.

In one embodiment, the drive mechanism securely clamps the spacer for transportation by securely clamping at least one longitudinal wire, preferably by means of a mechanical gripping system such as a clamp.

In one embodiment, the drive mechanism securely clamps the spacer by means of the longitudinal wires for transportation, preferably by means of a mechanical gripping system such as a clamp.

In one embodiment, at least one longitudinal wire is always securely clamped during transportation by the machine, preferably by means of a mechanical gripping system such as a clamp.

In one embodiment, the bottom longitudinal wire is securely clamped by the drive mechanism at the location of the weld points. This helps to secure the bottom longitudinal wire, among other things.

In one embodiment, the top longitudinal wire is securely clamped by the drive mechanism between two successive weld points. This helps to secure the top longitudinal wire, among other things.

The "repetitive movement" as described herein refers to a regular movement which is performed by the gripping systems. The repetitive movement comprises a succession of translational linear movements and pauses or immobilizations. In addition, operations such as the secure gripping of the spacer, releasing the spacer and returning it to the original position (by performing a translational linear movement), can form part of the repetitive movement of the gripping system. The pauses or immobilizations during the repetitive movement preferably correspond to the moments at which the welding installation weld the two frame structures to the top and bottom longitudinal wires.

In a further embodiment, the machine as described herein is characterized in that the welding installation comprises one or more sets of electrodes, which weld the frame structures to the top longitudinal wire, and comprises one or more electrodes which weld each of the frame structures to a bottom longitudinal wire.

As used herein, the term "welding installation", comprises all systems in which a thermal process leads to fusion of the longitudinal wire/frame structure provided as a base for the skeleton structure of the spacers.

In a preferred embodiment, the welding installation comprises one or more electrodes which weld the frame structures to the top longitudinal wire, and one or more electrodes which weld each of the frame structures to a bottom longitudinal wire.

As used herein, the term "electrode" as part of the welding installation comprises any structure which converts electrical energy into thermal energy with the function of welding a longitudinal wire to a frame structure, and/or vice versa, both provided as a basis for the skeleton structure of the spacers.

In a specific embodiment, the welding installation is a single-pass (step), a double-pass (step) or a multiple-pass (step) welding installation. With a single-pass welding installation, the welding installation is configured to weld the frame structures to the top longitudinal wire simultaneously, preferably by means of two weld points, namely a weld point on either side of the top longitudinal wire, and to weld each of the frame structures to a bottom longitudinal wire, preferably by means of a weld point on each of the bottom longitudinal wires. With a double-pass welding installation, the welding installation is configured to weld the frame structures to the top longitudinal wire at op two points simultaneously, preferably by means of four weld points, namely two weld points on either side of the top longitudinal wire, and to weld each of the frame structures to a bottom longitudinal wire at two points, preferably by means of two weld points on each of the bottom longitudinal wires. With a multiple-pass welding installation, the welding installation is configured to weld the frame structures to the top longitudinal wire at various points simultaneously, preferably by means of various weld points on either side of the top longitudinal wire, and to weld each of the frame structures to a bottom longitudinal wire at various points, preferably by means of various weld points on each of the bottom longitudinal wires.

As used herein, the term "set of electrodes" refers to a group of separate electrodes whose welding function is connected to each other in one welding cycle.

In a specific embodiment, a set of electrodes comprises two or several electrodes which are positioned on either side of the top longitudinal wire for simultaneous double-sided welding of the top longitudinal wire to the frame structure.

In a further embodiment, a set of electrodes comprises four or more electrodes, of which two or several electrodes are positioned on either side of the top longitudinal wire, and two or several electrodes are positioned on either side of each of the bottom longitudinal wires; in addition, the bottom electrodes may weld each of the bottom longitudinal wires on both sides, or only on one side, but be supported in that case by one or more elements placed on the reverse of the bottom longitudinal wires in order to absorb the welding pressure. In a particular embodiment, the welding installation contains one set of electrodes, which is referred to as a single-pass system.

In a particular embodiment, the welding installation contains two sets of electrodes, which is referred to as a double-pass system.

In a particular embodiment, the welding installation contains several sets of electrodes, which is referred to as a multiple-pass system.

The use of an electrode has the advantage that welding takes place in an energy-efficient and accurate manner. Here, the speed of welding depends on the intensity of the power supply to the electrode, on the resistance between the electrodes and the welding time. If the production speed of the machine has to be increased, this can be achieved in a simple manner by increasing the power intensity or welding time to the electrode.

The use of several electrodes in series ensures that several points can be welded simultaneously. This makes it possible to increase the transport distance to a multiple of the distance between the weld points, in which the multiple depends on the number of electrodes in series. As a result thereof, the production speed of the machine can be increased significantly.

In a further embodiment, the machine as described herein is characterized in that the electrodes are actuated by a pneumatic, hydraulic or electrical actuator, preferably an electrical actuator. Using an electrical actuator makes it possible for the machine as described herein to work in a more flexible manner. The reason for this is that it has been found that, compared to the widely used pneumatic or hydraulic actuators, electrical actuators can be adjusted more accurately and are also easier to adjust to perform the welding steps synchronously with the movement of the drive mechanism, at the point in time when the spacer is immobilized. In order to allow the production process to proceed as efficiently as possible, it is important for the period of immobilization to be kept as short as possible. Due to the improved accuracy of electrical actuators, it is possible to adapt the movement of the drive mechanism more accurately to the welding steps. In this way, the efficiency of the process increases while maintaining accuracy.

In addition, the adjustment of an electrode actuated by an electrical actuator is easier to accomplish. The welding process requires the contact surface of the electrode to be as flat as possible. During the welding process, burning in will have a detrimental effect on the flatness of the surface. Due to the complicated adjustment of pneumatic or hydraulic actuators, electrodes whose surface is no longer sufficiently flat are replaced whereas the surface of electrodes of electrical actuators can be partly milled off and be flattened again, since re-adjustment of the electrical actuator to the adapted length of the electrode can be performed in an easy and self-regulating manner.

In a further embodiment, the machine as described herein is characterized in that the drive mechanism is positioned downstream of the welding installation and pulls the spacer through the welding installation.

As used herein, the terms "upstream" and "downstream" refer to the direction of transport of the longitudinal wires/frame structures and/or spacer through the machine; with "upstream" referring to the direction and/or position opposite to the direction of transport, and "downstream" referring to the direction and/or position in the same direction as the direction of tra nsport.

A drive mechanism which is positioned downstream of the welding installation results in the spacer being pulled through the welding installation. This has the advantage that if a longitudinal wire/frame structure stays stuck to an electrode and/or a support during welding, it will not bend (double), but will rather be pulled loose from the electrode and/or support. In contrast to the embodiments which are customary in the prior art, the risk of possible folds of the longitudinal wire is reduced significantly as a result thereof.

If the longitudinal wire/frame structure remains stuck to the electrode, it can be released more easily due to the lack of folds and without necessarily having to restart production. This has the significant advantage that the 'downtime' of the machine for the correction of the longitudinal wires and/or spacers can be limited, which per se already results in an increased production efficiency of the machine.

The risk of sticking increases as the diameter of the wires decreases, the production speed increases, the current to the electrode is increased, and/or when using several electrodes. However, in recent years, there has been an increasing demand for ever lighter spacers to be produced in a shorter period of time which significantly increases the risk of the wires sticking with existing embodiments.

The present invention comprises a solution to reduce the risk of the longitudinal wire sticking to certain components. Should a longitudinal wire nevertheless become stuck, then the invention provides a solution to avoid bending (double) of the sticking longitudinal wire and to facilitate its release, as a result of which the risk of the sticking longitudinal wire tearing off decreases and thus the downtime of the production is significantly reduced. In addition, the invention also provides a solution for adapting the present machine to the production of spacers with different dimensions and/or diameters of the longitudinal wires/frame structures.

As a result of the comprised solution, the invention provided constitutes an improvement in the present method of both the production costs and production speed of spacers. In addition, the use of the invention offers the possibility of producing lighter spacers with a lower diameter of wires, which is very difficult using the machines and methods from the prior art.

In a further embodiment, the machine as described herein comprises a folding mechanism which is capable of folding a straight longitudinal wire to form a frame structure with a desired pattern. The advantage of a folding mechanism is that no separate supply of frame structures has to be provided. This would render an external machine for shaping the frame structures obsolete.

In a specific embodiment, the machine as described herein provides for the spacer to have a wire diameter for the top longitudinal wire, the bottom longitudinal wires and the two frame structures of 8 mm or less, 6 mm or less and 6 mm or less, respectively, preferably 6 mm, 5 mm and 5 mm, respectively, more preferably 5 mm, 4 mm and 4 mm, respectively, more preferably 5 mm, 4 mm and 3 mm, respectively, and more preferably 4 mm, 2.8 mm and 2.8 mm, respectively.

In a further aspect, the present invention provides a method having the features of claim 5.

The method by which the drive mechanism transfers the transport movement to the longitudinal wires and/or spacers is effected by means of gripping systems. In a preferred method, a clamp grips the longitudinal wires and/or spacers and the longitudinal wires and/or spacers will be transported by means of an entrainment mechanism. If a driving mechanism is positioned downstream of the welding installation, this will be effected by means of a pulling movement. If a driving mechanism is positioned upstream of the welding installation, this will be effected by a pushing movement.

The method by which the transport distance is determined depends on the number of electrodes in the welding installation which are placed in series. When using one set of electrodes, the transport distance will correspond to the distance between two weld points, when using several sets of electrodes, the transport distance will correspond to a multiple X of the distance between two weld points, wherein the multiple X depends on the number of electrodes in series; for example, when using two sets of electrodes, the multiple X will equal two and the transport distance will equal two times the distance between two weld points, et cetera.

In a further embodiment, the method as described herein is characterized in that, in step (a), one or more drive mechanisms clamp the spacers outside the welding installation and subsequently mechanically transport them to the position of the next weld point.

In a further embodiment, the method as described herein is characterized in that, in step (a), the transport distance corresponds to the distance between the weld points or a multiple thereof.

In a further embodiment, the method as described herein is characterized in that the repetitive movement of each of the gripping systems comprises at least the following successive steps:
(x1) securely gripping the spacer and immobilizing the spacer during a time interval Δt_{w};
(x2) performing a translational linear movement of the spacer over a distance Δxₘ during a time interval Δtₘ;
(x3) immobilizing the spacer during a time interval Δt_{w};
(x4) performing a translational linear movement of the spacer over a distance Δxₘ during a time interval Δtₘ;
(x5) immobilizing the spacer during a time interval Δt_{w};
(x6) performing a translational linear movement of the spacer over a distance Δxₘ during a time interval Δtₘ;
(x7) immobilizing the spacer during a time interval Δt_{w};
(x8) releasing the spacer and performing a translational linear movement over a distance (-3Δxₘ) during a time interval Δt_{b}; and
repeating steps (x1) to (x8).

The time interval Δt_{w} as described herein corresponds to the period during which the spacer is immobilized in a fixed location. During this time interval, the welding installation will fix the components of the spacer by welding.

The displacement distance Δxₘ corresponds to the distance across which the spacer is displaced between two welding moments. The transport distance Δxₘ is determined on the basis of the number of electrodes which are placed in series in the welding installation. When using one set of electrodes, the transport distance will correspond to the distance between two weld points, when using several sets of electrodes, the transport distance will correspond to a multiple X of the distance between two weld points, wherein the multiple X depends on the number of electrodes in series; for example, when using two sets of electrodes, the multiple X will equal two and the transport distance will equal two times the distance between two weld points, et cetera. Depending on the displacement distance, acceleration and speed of the gripping system, the movement is effected within a time interval Δtₘ.

The spacer is displaced by means of a translational linear movement.

The distance which the gripping system has to travel between the location where the spacer is released and the location where the spacer is securely gripped in order to return corresponds to the total distance which is travelled between securely gripping and releasing the spacer. In the above-described step process, the displacement distance to return is (-3Δxₘ). This displacement is effected during a time interval Δt_{b}. Preferably, Δt_{b} equals the time interval Δtₘ.

In a specific embodiment, the method as described herein is characterized in that the repetitive movement of the first gripping system comprises at least the following successive steps:
(x1) securely gripping the spacer and immobilizing the spacer during a time interval Δt_{w};
(x2) performing a translational linear movement of the spacer over a distance Δxₘ during a time interval Δtₘ;
(x3) immobilizing the spacer during a time interval Δt_{w};
(x4) performing a translational linear movement of the spacer over a distance Δxₘ during a time interval Δtₘ;
(x5) immobilizing the spacer during a time interval Δt_{w};
(x6) performing a translational linear movement of the spacer over a distance Δxₘ during a time interval Δtₘ;
(x7) immobilizing the spacer during a time interval Δt_{w};
(x8) releasing the spacer and performing a translational linear movement over a distance (-3Δxₘ) during a time interval Δt_{b}; and
repeating steps (x1) to (x8); and
characterized in that the repetitive movement of the second gripping system comprises at least the following successive steps:
   (y1) securely gripping the spacer and immobilizing the spacer during a time interval Δt_{w};
   (y2) performing a translational linear movement of the spacer over a distance Δxₘ during a time interval Δtₘ;
   (y3) immobilizing the spacer during a time interval Δt_{w};
   (y4) performing a translational linear movement of the spacer over a distance Δxₘ during a time interval Δtₘ;
   (y5) immobilizing the spacer during a time interval Δt_{w};
   (y6) performing a translational linear movement of the spacer over a distance Δxₘ during a time interval Δtₘ;
   (y7) immobilizing the spacer during a time interval Δt_{w};
   (y8) releasing the spacer and performing a translational linear movement over a distance (-3Δxₘ) during a time interval Δt_{b}; and
   repeating steps (y1) to (y8); wherein step (y1) is performed by the second gripping system at the point in time where step (x3) or step (x5) is being performed by the first gripping system.

In a further embodiment, the method as described herein is characterized in that step (b) is performed during the steps in which the spacer is immobilized.

In a further embodiment, the method as described herein is characterized in that the welding installation comprises one or more sets of electrodes which weld the frame structures to the top longitudinal wire and comprise one or more electrodes which weld each of the frame structures to a bottom longitudinal wire.

In a further embodiment, the method as described herein is characterized in that the electrodes are actuated by a pneumatic, hydraulic or electrical actuator, preferably an electrical actuator.

In a further aspect, the present invention comprises the use of a machine as described herein for producing spacers according to claim 12.

The present invention provides a more accurate but also more flexible way of producing spacers for lattice girders. The flexibility of the system also ensures that modifications to the shape of the spacer or lattice girder can easily be made. An example thereof is the production of asymmetrical spacers for lattice girders in which the distances between the weld points are greater in some locations and the distances between the weld points are shorter in other locations of the frame structure.

### EXAMPLES

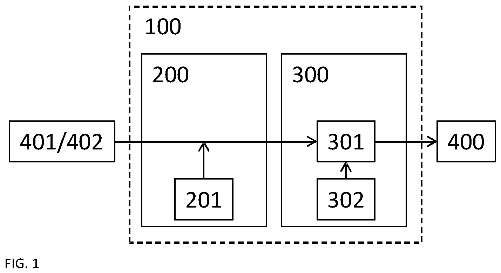

Fig. 1 is a diagrammatic drawing of a specific embodiment of the machine (100) for producing spacers (400). Longitudinal wires (401) and frame structures (402) are provided. The machine (100) comprises a welding installation (200) which welds the products by means of one or more electrodes (201) and a drive mechanism (300) for transporting the spacers through the welding installation by means of a gripping mechanism (301) coupled to an entrainment mechanism (302), characterized in that the drive mechanism (300) is configured to continuously securely clamp the spacer (400).

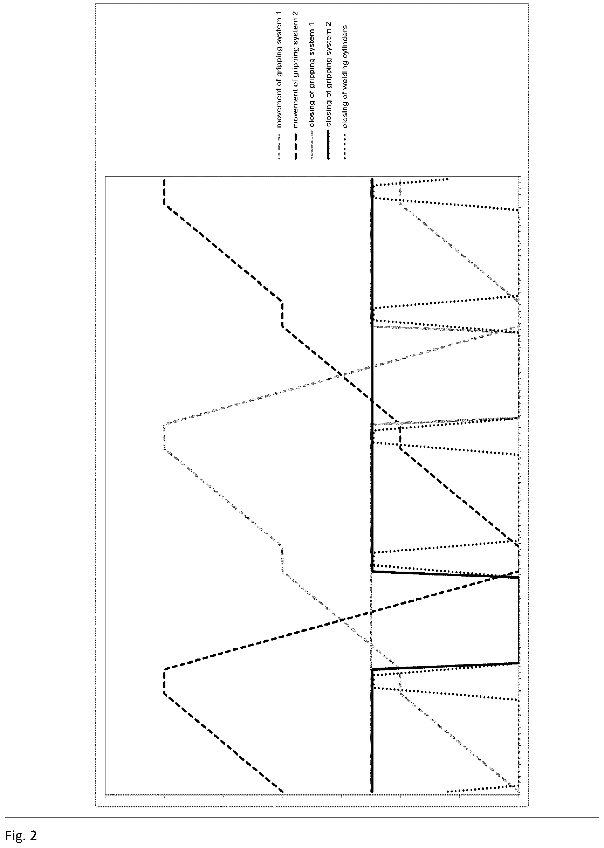

By ensuring that the drive mechanism (300) continuously securely clamps the spacer (400), the problem of displacement during welding of the spacer be avoided. In addition, it ensures that welding is always performed at the correct position. In one specific embodiment of the machine, the drive mechanism uses two gripping systems which securely grip the spacer and transport it through the welding installation. In Fig. 2, the movements of the drive mechanism and the welding installation are illustrated. The various movements consist of the following steps for the first gripping system:
(x1) securely gripping the spacer and immobilizing the spacer during a time interval Δt_{w};
(x2) performing a translational linear movement of the spacer over a distance Δxₘ during a time interval Δtₘ;
(x3) immobilizing the spacer during a time interval Δt_{w};
(x4) performing a translational linear movement of the spacer over a distance Δxₘ during a time interval Δtₘ;
(x5) immobilizing the spacer during a time interval Δt_{w};
(x6) performing a translational linear movement of the spacer over a distance Δxₘ during a time interval Δtₘ;
(x7) immobilizing the spacer during a time interval Δt_{w};
(x8) releasing the spacer and performing a translational linear movement over a distance (-3Δxₘ) during a time interval Δt_{b}; and
repeating steps (x1) to (x8); and
for the second gripping system:
   (y1) securely gripping the spacer and immobilizing the spacer during a time interval Δt_{w};
   (y2) performing a translational linear movement of the spacer over a distance Δxₘ during a time interval Δtₘ;
   (y3) immobilizing the spacer during a time interval Δt_{w};
   (y4) performing a translational linear movement of the spacer over a distance Δxₘ during a time interval Δtₘ;
   (y5) immobilizing the spacer during a time interval Δt_{w};
   (y6) performing a translational linear movement of the spacer over a distance Δxₘ during a time interval Δtₘ;
   (y7) immobilizing the spacer during a time interval Δt_{w};
   (y8) releasing the spacer and performing a translational linear movement over a distance (-3Δxₘ) during a time interval Δt_{b}; and
   repeating steps (y1) to (y8); wherein step (y1) is performed by the second gripping system at the point in time where step (x5) is being performed by the first gripping system.

More specifically, the spacer comprises a bottom longitudinal wire and a top longitudinal wire to which a zigzag wire is welded as a frame structure by means of various weld points.

More specifically, the bottom longitudinal wire is securely clamped by the first gripping system at the location of a weld point and the top longitudinal wire is securely clamped by the second gripping system between two successive weld points.

## Claims

1. Machine (100) for producing spacers (400) for concrete reinforcements and/or concrete structures, the spacers comprising two parallel straight longitudinal wires (401), in which the bottom longitudinal wire is connected to the top longitudinal wire by means of a frame structure (402), the machine furthermore comprising:
a. a welding installation (200) for welding together the frame structure to the top longitudinal wire, and welding together the frame structure to the bottom longitudinal wire, and;
b. a drive mechanism (300) for transporting the spacers through the welding installation, the drive mechanism comprising a system which securely clamps the spacer for transportation, preferably by means of a mechanical gripping system such as a clamp;
wherein the drive mechanism is configured to continuously securely clamp the spacer
**characterized in that** the drive mechanism comprises at least two gripping systems, both of which perform a virtually identical repetitive movement comprising a succession of translational linear movements and pauses, the translational linear movement displacing the spacer, in which the repetitive movement of the first gripping system exhibits a phase shift with respect to the repetitive movement of the second gripping system.

2. Machine according to claim 1, **characterized in that** the welding installation comprises one or more sets of electrodes (201) which weld the frame structures to the top longitudinal wire, and comprises one or more electrodes which weld each of the frame structures to a bottom longitudinal wire.

3. Machine according to Claim 2, **characterized in that** the electrodes are actuated by a pneumatic, hydraulic or electrical actuator, preferably an electrical actuator.

4. Machine according to one of the preceding claims, **characterized in that** the drive mechanism is positioned downstream of the welding installation and pulls the spacer through the welding installation.

5. Method for producing spacers (400) for concrete reinforcements and/or concrete structures comprising the following steps:
a. transporting the components of spacers, comprising two longitudinal wires (401) and one frame structure (402), through a welding installation (200), and;
b. welding the top longitudinal wire to the frame structure in the welding installation, and, welding together the frame structure to the bottom longitudinal wire;
wherein step (a) is effected by a drive mechanism (300) for transporting the spacers through the welding installation, wherein the drive mechanism comprises a system which securely clamps the spacer for transportation, preferably by means of a mechanical gripping system such as a clamp;
wherein the drive mechanism is configured to continuously securely clamp the spacer
**characterized in that** the drive mechanism comprises at least two gripping systems, both of which perform a virtually identical repetitive movement comprising a succession of translational linear movements and pauses, the translational linear movement transporting the spacer through the welding installation, in which the repetitive movement of the first gripping system exhibits a phase shift with respect to the repetitive movement of the second gripping system.

6. Method according to Claim 5, wherein, in step (a), one or more drive mechanisms clamp the spacers outside the welding installation and subsequently transport them mechanically to the position of the next weld point.

7. Method according to one of Claims 5 to 6, wherein, in step (a), the transport distance corresponds to the distance between the weld points or a multiple thereof.

8. Method according to one of Claims 5 to 7, wherein the repetitive movement of each of the gripping systems comprises at least the following successive steps:
(x1) securely gripping the spacer and immobilizing the spacer during a time interval Δt_{w};
(x2) performing a translational linear movement of the spacer over a distance Δxₘ during a time interval Δtₘ;
(x3) immobilizing the spacer during a time interval Δt_{w};
(x4) performing a translational linear movement of the spacer over a distance Δxₘ during a time interval Δtₘ;
(x5) immobilizing the spacer during a time interval Δt_{w};
(x6) performing a translational linear movement of the spacer over a distance Δxₘ during a time interval Δtₘ;
(x7) immobilizing of the spacer during a time interval Δt_{w};
(x8) releasing the spacer and performing a translational linear movement over a distance (-3Δxₘ) during a time interval Δt_{b}; and
repeating steps (x1) to (x8).

9. Method according to Claim 8, wherein step (b) is performed during the steps in which the spacer is being immobilized.

10. Method according to one of Claims 5 to 9, **characterized in that** the welding installation comprises one or more sets of electrodes which weld the frame structures to the top longitudinal wire and comprises one or more electrodes which weld each of the frame structures to a bottom longitudinal wire.

11. Method according to Claim 10, **characterized in that** the electrodes are actuated by a pneumatic, hydraulic or electrical actuator, preferably an electrical actuator.

12. Use of a machine according to one of Claims 1 to 4 for producing spacers.

## Patentansprüche

1. Maschine (100) zum Herstellen von Abstandhaltern (400) für Betonbewehrungen und/oder Betonstrukturen, wobei die Abstandhalter zwei parallele gerade Längsdrähte (401) umfassen, wobei der untere Längsdraht mittels einer Rahmenstruktur (402) mit dem oberen Längsdraht verbunden ist, wobei die Maschine ferner Folgendes umfasst:
a. eine Schweißanlage (200) zum Zusammenschweißen der Rahmenstruktur mit dem oberen Längsdraht und Zusammenschweißen der Rahmenstruktur mit dem unteren Längsdraht, und;
b. einen Antriebsmechanismus (300) zum Transportieren der Abstandhalter durch die Schweißanlage, wobei der Antriebsmechanismus ein System umfasst, das den Abstandhalter für den Transport, vorzugsweise mittels eines mechanischen Klemmsystems wie etwa einer Spannvorrichtung, sicher einspannt;
wobei der Antriebsmechanismus dazu ausgelegt ist, den Abstandhalter kontinuierlich sicher einzuspannen, **dadurch gekennzeichnet, dass** der Antriebsmechanismus mindestens zwei Klemmsysteme umfasst, die beide eine nahezu identische sich wiederholende Bewegung ausführen, die eine Abfolge translatorischer linearer Bewegungen und Pausen umfasst, wobei die translatorische lineare Bewegung den Abstandhalter verlagert, wobei die sich wiederholende Bewegung des ersten Klemmsystems eine Phasenverschiebung in Bezug auf die sich wiederholende Bewegung des zweiten Klemmsystems aufweist.

2. Maschine nach Anspruch 1, **dadurch gekennzeichnet, dass** die Schweißanlage einen oder mehrere Sätze von Elektroden (201) umfasst, die die Rahmenstrukturen an den oberen Längsdraht schweißen, und eine oder mehrere Elektroden umfasst, die jede der Rahmenstrukturen an einen unteren Längsdraht schweißen.

3. Maschine nach Anspruch 2, **dadurch gekennzeichnet, dass** die Elektroden durch einen pneumatischen, hydraulischen oder elektrischen Aktuator, vorzugsweise einen elektrischen Aktuator, betätigt werden.

4. Maschine nach einem der vorhergehenden Ansprüche, **dadurch gekennzeichnet, dass** der Antriebsmechanismus stromabwärts der Schweißanlage positioniert ist und den Abstandhalter durch die Schweißanlage zieht.

5. Verfahren zum Herstellen von Abstandhaltern (400) für Betonbewehrungen und/oder Betonstrukturen, umfassend die folgenden Schritte:
a. Transportieren der Komponenten von Abstandhaltern, umfassend zwei Längsdrähte (401) und eine Rahmenstruktur (402), durch eine Schweißanlage (200), und;
b. Schweißen des oberen Längsdrahts an die Rahmenstruktur in der Schweißanlage, und Zusammenschweißen der Rahmenstruktur mit dem unteren Längsdraht;
wobei Schritt (a) durch einen Antriebsmechanismus (300) zum Transportieren der Abstandhalter durch die Schweißanlage durchgeführt wird, wobei der Antriebsmechanismus ein System umfasst, das den Abstandhalter für den Transport, vorzugsweise mittels eines mechanischen Klemmsystems wie etwa einer Spannvorrichtung, sicher einspannt;
wobei der Antriebsmechanismus dazu ausgelegt ist, den Abstandhalter kontinuierlich sicher einzuspannen, **dadurch gekennzeichnet, dass** der Antriebsmechanismus mindestens zwei Klemmsysteme umfasst, die beide eine nahezu identische sich wiederholende Bewegung ausführen, die eine Abfolge translatorischer linearer Bewegungen und Pausen umfasst, wobei die translatorische lineare Bewegung den Abstandhalter durch die Schweißanlage transportiert, wobei die sich wiederholende Bewegung des ersten Klemmsystems eine Phasenverschiebung in Bezug auf die sich wiederholende Bewegung des zweiten Klemmsystems aufweist.

6. Verfahren nach Anspruch 5, wobei in Schritt (a) ein oder mehrere Antriebsmechanismen die Abstandhalter außerhalb der Schweißanlage einspannen und sie anschließend mechanisch zu der Position des nächsten Schweißpunkts transportieren.

7. Verfahren nach einem der Ansprüche 5 bis 6, wobei in Schritt (a) die Transportdistanz der Distanz zwischen den Schweißpunkten oder einem Vielfachen davon entspricht.

8. Verfahren nach einem der Ansprüche 5 bis 7, wobei die sich wiederholende Bewegung jedes der Klemmsysteme mindestens die folgenden aufeinanderfolgenden Schritte umfasst:
(x1) sicheres Klemmen des Abstandhalters und Immobilisieren des Abstandhalters während einer Zeitdauer Δt_{w};
(x2) Ausführen einer translatorischen linearen Bewegung des Abstandhalters über eine Distanz Δxₘ während einer Zeitdauer Δtₘ;
(x3) Immobilisieren des Abstandhalters während einer Zeitdauer Δt_{w};
(x4) Ausführen einer translatorischen linearen Bewegung des Abstandhalters über eine Distanz Δxₘ während einer Zeitdauer Δtₘ;
(x5) Immobilisieren des Abstandhalters während einer Zeitdauer Δt_{w};
(x6) Ausführen einer translatorischen linearen Bewegung des Abstandhalters über eine Distanz Δxₘ während einer Zeitdauer Δtₘ;
(x7) Immobilisieren des Abstandhalters während einer Zeitdauer Δt_{w};
(x8) Freigeben des Abstandhalters und Ausführen einer translatorischen linearen Bewegung über eine Distanz (-3Δxₘ) während einer Zeitdauer Δt_{b}; und
Wiederholen der Schritte (x1) bis (x8).

9. Verfahren nach Anspruch 8, wobei Schritt (b) während der Schritte ausgeführt wird, in denen der Abstandhalter immobilisiert wird.

10. Verfahren nach einem der Ansprüche 5 bis 9, **dadurch gekennzeichnet, dass** die Schweißanlage einen oder mehrere Sätze von Elektroden umfasst, die die Rahmenstrukturen an den oberen Längsdraht schweißen, und eine oder mehrere Elektroden umfasst, die jede der Rahmenstrukturen an einen unteren Längsdraht schweißen.

11. Verfahren nach Anspruch 10, **dadurch gekennzeichnet, dass** die Elektroden durch einen pneumatischen, hydraulischen oder elektrischen Aktuator, vorzugsweise einen elektrischen Aktuator, betätigt werden.

12. Verwendung einer Maschine nach einem der Ansprüche 1 bis 4 zum Herstellen von Abstandhaltern.

## Revendications

1. Machine (100) pour produire des pièces d'espacement (400) pour armatures pour béton et/ou structures de béton, les pièces d'espacement comprenant deux fils longitudinaux (401) droits parallèles, dans lesquels le fil longitudinal inférieur est relié au fil longitudinal supérieur au moyen d'une structure bâti (402), la machine comprenant en outre :
a. une installation de soudage (200) pour souder ensemble la structure bâti au fil longitudinal supérieur, et souder ensemble la structure bâti au fil longitudinal inférieur ; et,
b. un mécanisme d'entraînement (300) pour transporter les pièces d'espacement à travers l'installation de soudage, le mécanisme d'entraînement comprenant un système qui serre fermement la pièce d'espacement pour le transport, de préférence au moyen d'un système de prise mécanique tel qu'une pince de serrage ;
dans laquelle le mécanisme d'entraînement est configuré pour serrer fermement en continu la pièce d'espacement, **caractérisée en ce que** le mécanisme d'entraînement comprend au moins deux systèmes de prise, dont les deux réalisent un mouvement répétitif pratiquement identique comprenant une succession de mouvements linéaires translationnels et de pauses, le mouvement linéaire translationnel déplaçant la pièce d'espacement, dans lequel le mouvement répétitif du premier système de prise présente un déphasage par rapport au mouvement répétitif du second système de prise.

2. Machine selon la revendication 1, **caractérisée en ce que** l'installation de soudage comprend un ou plusieurs ensembles d'électrodes (201) qui soudent les structures bâtis au fil longitudinal supérieur, et comprend une ou plusieurs électrodes qui soudent chacune des structures bâtis à un fil longitudinal inférieur.

3. Machine selon la revendication 2, **caractérisée en ce que** les électrodes sont actionnées par un actionneur pneumatique, hydraulique, ou électrique, de préférence un actionneur électrique.

4. Machine selon l'une des revendications précédentes, **caractérisée en ce que** le mécanisme d'entraînement est positionné en aval de l'installation de soudage et tire la pièce d'espacement à travers l'installation de soudage.

5. Procédé pour produire pièces d'espacement (400) pour armatures pour béton et/ou structures de béton, comprenant les étapes suivantes :
a. le transport des composants de pièces d'espacement, comprenant deux fils longitudinaux (401) et une structure bâti (402), à travers une installation de soudage (200) ; et,
b. le soudage du fil longitudinal supérieur à la structure bâti dans l'installation de soudage, et, le soudage, ensemble, de la structure bâti au fil longitudinal inférieur ;
dans lequel l'étape (a) est effectuée par un mécanisme d'entraînement (300) pour transporter les pièces d'espacement à travers l'installation de soudage, dans lequel le mécanisme d'entraînement comprend un système qui serre fermement la pièce d'espacement pour le transport, de préférence au moyen d'un système de prise mécanique tel qu'une pince de serrage ;
dans lequel le mécanisme d'entraînement est configuré pour serrer fermement en continu la pièce d'espacement, **caractérisé en ce que** le mécanisme d'entraînement comprend au moins deux systèmes de prise, dont les deux réalisent un mouvement répétitif pratiquement identique comprenant une succession de mouvements linéaires translationnels et de pauses, le mouvement linéaire translationnel transportant la pièce d'espacement à travers l'installation de soudage, dans lequel le mouvement répétitif du premier système de prise présente un déphasage par rapport au mouvement répétitif du second système de prise.

6. Procédé selon la revendication 5, dans lequel, dans l'étape (a), un ou plusieurs mécanismes d'entraînement serrent les pièces d'espacement à l'extérieur de l'installation de soudage et par la suite les transportent mécaniquement jusqu'à la position du point de soudure suivant.

7. Procédé selon l'une des revendications 5 et 6, dans lequel, dans l'étape (a), la distance de transport correspond à la distance entre les points de soudure ou un multiple de celle-ci.

8. Procédé selon l'une des revendications 5 à 7, dans lequel le mouvement répétitif de chacun des systèmes de prise comprend au moins les étapes successives suivantes :
(x1) la prise ferme de la pièce d'espacement et l'immobilisation de la pièce d'espacement durant un intervalle de temps Δt_{w} ;
(x2) la réalisation d'un mouvement linéaire translationnel de la pièce d'espacement sur une distance Δxₘ durant un intervalle de temps Δtₘ ;
(x3) l'immobilisation de la pièce d'espacement durant un intervalle de temps Δt_{w} ;
(x4) la réalisation d'un mouvement linéaire translationnel de la pièce d'espacement sur une distance Δxₘ durant un intervalle de temps Δtₘ ;
(x5) l'immobilisation de la pièce d'espacement durant un intervalle de temps Δt_{w} ;
(x6) la réalisation d'un mouvement linéaire translationnel de la pièce d'espacement sur une distance Δxₘ durant un intervalle de temps Δtₘ ;
(x7) l'immobilisation de la pièce d'espacement durant un intervalle de temps Δt_{w} ;
(x8) la libération de la pièce d'espacement et la réalisation d'un mouvement linéaire translationnel sur une distance (-3Δxₘ) durant un intervalle de temps Δt_{b} ; et
la répétition des étapes (x1) à (x8).

9. Procédé selon la revendication 8, dans lequel l'étape (b) est réalisée durant les étapes dans lesquelles la pièce d'espacement est immobilisée.

10. Procédé selon l'une des revendications 5 à 9, **caractérisé en ce que** l'installation de soudage comprend un ou plusieurs ensembles d'électrodes qui soudent les structures bâtis au fil longitudinal supérieur et comprend une ou plusieurs électrodes qui soudent chacune des structures bâtis à un fil longitudinal inférieur.

11. Procédé selon la revendication 10, **caractérisé en ce que** les électrodes sont actionnées par un actionneur pneumatique, hydraulique, ou électrique, de préférence un actionneur électrique.

12. Utilisation d'une machine selon l'une des revendications 1 à 4 pour produire des pièces d'espacement.
